# EUROPÄISCHE PATENTSCHRIFT

(11) **EP 1 702 166 B1**
(45) Veröffentlichungstag und Bekanntmachung des Hinweises auf die Patenterteilung: **21.10.2009**
(21) Anmeldenummer: 05700519.1
(22) Anmeldetag: 05.01.2005
(51) Int. Cl.: F16C 11/06

(54) **KUGELGELENK, VORZUGSWEISE ZUM EINSATZ IN FAHRZEUGEN**
BALL-AND-SOCKET JOINT, PREFERABLY FOR USING IN VEHICLES
ARTICULATION A ROTULE, A UTILISER DE PREFERENCE DANS DES VEHICULES

(30) Priorität: 08.01.2004 DE 102004001465
(43) Veröffentlichungstag der Anmeldung: 20.09.2006
(73) Patentinhaber: ZF Friedrichshafen AG, 88038 Friedrichshafen (DE)
(72) Erfinder: HEIDEMANN, Manfred, 49191 Belm-Vehrte (DE); NOE, Helmut, 48477 Hörstel (DE); WEHRSSE, Anja, 31604 Raddestorf (DE)
(86) Internationale Anmeldenummer: PCT/DE2005/000004
(87) Internationale Veröffentlichungsnummer: WO 2005/066509

(56) Entgegenhaltungen:
- DE-A1- 10 250 147
- DE-A1- 10 300 678
- US-B1- 6 357 956
- PATENT ABSTRACTS OF JAPAN Bd. 1999, Nr. 08, 30. Juni 1999 (1999-06-30) & JP 11 063245 A (NOK CORP), 5. März 1999 (1999-03-05)

## Beschreibung

Die Erfindung betrifft ein Kugelgelenk, vorzugsweise zum Einsatz in Fahrzeugen, insbesondere im Bereich des Fahrwerkes von Kraftfahrzeugen, mit einem, eine Gelenköffnung aufweisenden Kugelgelenkgehäuse, mit einem im Kugelgelenkgehäuse angeordneten, sich durch die Gelenköffnung erstreckenden Kugelzapfen, an den ein Schaft angeformt ist, mit einem, auf dem Schaft des Kugelzapfens angeordneten Stützring und einem Dichtelement, das zwischen dem Stützring und einem den Schaft des Kugelzapfens umschließenden Anschlussbauteil angeordnet ist; gemäß Oberbegriff des Anspruchs 1.

Bei Kugelgelenken besteht regelmäßig die Notwendigkeit, die Relativbewegung der Gelenkteile zueinander ohne Funktionseinschränkungen zumindest über eine vorgegebene Einsatzdauer für den betreffenden Kugelgelenktyp zu gewährleisten. Dabei muss eine hinreichende Abdichtung gegen äußere Einflüsse, insbesondere gegen das Eindringen von Fremdkörpern und Feuchtigkeit, gegeben sein. Hierfür sind auf dem Kugelzapfen des Kugelgelenkes angeordnete Stützringe im Einsatz, auf denen das zapfenseitige Dichtlabyrinth eines Dichtungsbalges dichtend fixiert werden kann.

In diesem Zusammenhang ist aus der DE-OS 37 05 847 ein Kugelgelenk für Kraftfahrzeuge bekannt, welches zwischen dem Gehäuse des Kugelgelenkes und einem die Gelenkkugel tragenden Kugelzapfen eine Dichtungsmanschette aus einem elastisch verformbaren Werkstoff aufweist. Zwischen der Lagerfläche der Dichtungsmanschette und dem Kugelzapfen ist ein auf dem Kugelzapfen haftend angeordneter Stützring eingesetzt, der mit der Lagerfläche der Dichtungsmanschette formschlüssig im Eingriff steht.

Die Abdichtung im Bereich des Stützringes erfolgt bei dieser Lösung, indem der Stützring mit einer Beschichtung aus einem elastischen Werkstoff versehen ist Aus der DE 203 00 678 A1 ist weiterhin ein Kugelgelenk bekannt, das im Wesentlichen aus einem Kugelzapfen und einer Kugelpfanne zum Halten des Kopfes des Kugelzapfens mit einem dazwischen eingefügten Lager besteht. Des Weiteren verfügt das Kugelgelenk über einen Haltering, der ein zylindrisches Teil, das an einer Außenumfangsfläche des Schaftes des Kugelzapfens angebracht ist, und einen Flansch umfasst, der vom einem Ende des zylindrischen Teils des Halterings absteht und mit einem Befestigungswulst einer Muffe in engen Kontakt gelangt.

Im Rahmen dieser Lehre wird der Bereich, in welchem der Haltering an dem Schaft des Kugelzapfens angebracht ist, mit einem Dichtungsmittel gefüllt, das als Flüssigkeit in Ausnehmungen in diesem Bereich eindringt.

Weiterhin zeigt die US 6,357,956 B1 ein Kugelgelenk zum Einsatz im Bereich des Fahrwerks von Kraftfahrzeugen. Das Kugelgelenk weist einen in einem Kugelgelenkgehäuse angeordneten Kugelzapfen auf, an dem ein Schaft angeformt ist. Auf dem Schaft des Kugelzapfens ist ein Stützring vorgesehen sowie ein Dichtelement, das zwischen dem Stützring und einem dem den Schaft des Kugelzapfens umschließenden Anschlussbauteil angeordnet ist. Das Dichtelement ist als ein elastisch verformbarer Profilkörper mit einem im unverformten Zustand kreisförmigen Querschnitt ausgebildet, so dass zumindest ein Teilbereich der Kontur des Dichtelements an den angrenzenden und abdichtenden Bereichen anliegt. Der kreisförmige Querschnitt des Dichtelements kann allerdings nicht für jeden Anwendungsfall eine optimale Dichtwirkung gewährleisten.

Der Erfindung liegt die Aufgabe zugrunde, ein Kugelgelenk derart weiter zu entwickeln, dass dessen Funktionsfähigkeit unabhängig von der konkreten Bauform des Gelenkes über vergleichsweise lange Zeiträume erhalten bleibt, ohne durch Korrosionserscheinungen im Bereich des Kugelzapfens negativ beeinflusst zu sein.

Die Aufgabe an einem Kugelgelenk der beschriebenen Art wird dadurch gelöst, dass das der Abdichtung des Schaftes des Kugelzapfens dienende Dichtelement als elastisch und/oder plastisch verformbarer Profilkörper ausgebildet ist, dessen wirksamer, krafteinwirkungsfreier Querschnitt von einer stetig verlaufenden, gekrümmten Kontur begrenzt ist, die im eingebauten Zustand einer Deformation unterliegt, im Ergebnis derer zumindest ein Teilbereich der Kontur an den angrenzenden und abzudichtenden Bereichen anliegt. Erfindungsgemäß ist dabei vorgesehen, dass der elastisch und/oder plastisch verformbare Profilkörper einen Profilgrundkörper und Dichtsegmente aufweist

Die Erfindung ist mit dem Vorteil verbunden, dass auf der Grundlage der gegebenen elastischen und/oder plastischen Verformbarkeit des Profilkörpers insbesondere dessen Materialeigenschaften und geometrische Ausgestaltung, wie etwa die Kontur des Querschnittes, derart gezielt gewählt werden, dass in Abhängigkeit von der Einbaulage und der auf den Profilkörper ausgeübten Vorspannung die geforderte Dichtwirkung erzielt wird.

Zur Realisierung einer selektiven Dichtfunktion des als Profilkörper ausgeführten Dichtelementes weist der elastisch und/oder plastisch verformbare Profilkörper einen Profilgrundkörper und Dichtsegmente auf. Das betreffende Dichtsegment kann somit unter anderem über die Art seiner Anordnung am und Verbindung zum Profilgrundkörper der jeweils zu erbringenden Dichtfunktion speziell angepasst sein. Bevorzugt erstreckt sich dabei zumindest eine Teilanzahl der Dichtsegmente bezogen auf den Profilgrundkörper in im Wesentlichen radialer Richtung.

Für eine verwendungsabhängige Steuerung des Auslenkungsverhaltens der Dichtsegmente, gegebenenfalls für Schaffung eines übereinstimmenden Ansprechverhaltens für eine bestimmte Anzahl von Dichtsegmenten, können zur Verbindung des Profilgrundkörpers mit den Dichtsegmenten Übergangsbereiche vorgesehen sein, deren Gestaltung und Materialauswahl derart erfolgt, dass eine elastische und vorspannungsbezogene Auslenkung des an den jeweiligen Übergangsbereich angrenzenden Dichtsegmentes gegeben ist.

In bevorzugter Ausgestaltung der Erfindung weist der Profilkörper eine Verbindungsfläche auf, über die der Profilkörper mit einem angrenzenden Bauteil verbunden ist.

Bei dem angrenzenden Bauteil handelt es sich vorzugsweise um den auf dem Kugelzapfen des Kugelgelenkes anzuordnenden Stützring. Die Verbindung des Profilkörpers mit dem Stützring kann dabei durch Vulkanisation oder durch Verkleben hergestellt sein.

Auch besteht die Möglichkeit, den Profilkörper in Vorbereitung der Montage des Kugelgelenkes auf dem Schaft des Kugelzapfens oder dem Stützring zu positionieren. Die Positionierung des Profilkörpers kann zweckmäßig im Ergebnis eines radialen Aufweitens desselben durch Form- und/oder Kraftschluss auf dem betreffenden Bauteil erfolgten.

In weiterer bevorzugter Ausgestaltung der Erfindung weist der Stützring einen radial verlaufenden Flansch auf, an dem zumindest ein Dichtsegment des Profilkörpers unter Vorspannung anliegt. Ergänzend wie auch alternativ hierzu kann an der radial außenliegenden Stirnfläche des Flansches des Stützringes zumindest ein Dichtsegment des Profilkörpers unter Vorspannung anliegen, so dass auf dieser Grundlage ein redundantes Dichtsystem geschaffen werden kann.

Zur Schaffung definierter Elastizitäts- und Dichtverhältnisse kann der Profilkörper Stabilisierungselemente aufweisen, die als Band- oder Rundmaterial ausgeführt sein können und der Stabilisierung der Kernstruktur der Übergangsbereiche zu den Dichtsegmenten und der Dichtsegmente selbst dienen.

Die Erfindung soll nachfolgend anhand eines Ausführungsbeispieles und zugehöriger Zeichnungen näher erläutert werden.

### Es zeigen

- Fig. 1: eine Übersichtsdarstellung einer als Kugelgelenk ausgeführten Gelenkverbindung mit erfindungsgemäßem Profilkörper,
- Fig. 2 - 4: Darstellungen der Einzelheit X gemäß Fig. 1 mit im eingebauten und damit vorgespannten Zustand befindlichen, jeweils sich in ihrer Querschnittskontur voneinander unterscheidenden Profilkörpern und
- Fig. 5: eine Schnittdarstellung von weiteren, nicht vorgespannten Profilkörpern.

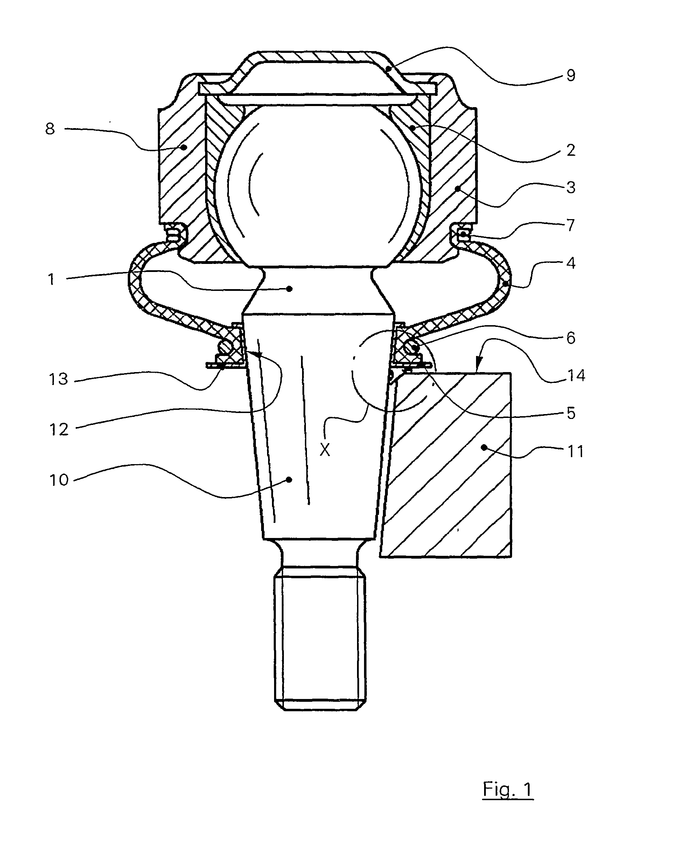

Bei der in Fig. 1 schematisch dargestellten Gelenkverbindung handelt es sich um ein dem Fachmann an sich bekanntes Kugelgelenk. Die Darstellung des Aufbaus des Kugelgelenkes kann sich daher auf die wichtigsten Elemente beschränken.

Das Kugelgelenk besteht im Wesentlichen aus einem Kugelzapfen 1, einer Lagerschale 2 und einem Gehäuse 3, das Kugelzapfen 1 und Lagerschale 2 zumindest teilweise umschließt. Die Abdichtung des Kugelgelenkes im Übergangsbereich vom Gehäuse 3 zum Kugelzapfen 1 erfolgt durch einen Dichtungsbalg 4, der mittels Stützring 5, Rundspannring 6 und Flachspannring 7 in Dichtposition gehalten wird und eine Relativlageänderung des Kugelzapfens 1 zum Gehäuse 3 ermöglicht.

Das Gehäuse 3 seinerseits ist zweiteilig ausgeführt und umfasst einen Gehäusegrundkörper 8 und einen Verschlussdeckel 9, der nach Einsetzen des Kugelzapfens 1 in den Gehäusegrundkörper 8 das Gehäuse 3 auf der dem Kugelzapfen 1 abgewandten Seite verschließt.

Der Kugelzapfens 1 verfügt über einen konisch verlaufenden Schaft 10, der form-und kraftschlüssig mit einem Anschlussbauteil 11 verbunden ist und den Stützring 5 trägt, der seinerseits aus einem, am Schaft 10 des Kugelzapfens 1 anliegenden Basissteg 12 und einen zum Basissteg 12 im Winkel verlaufenden Flansch 13 gebildet ist.

Der Flansch 13 des Stützringes 5 und eine Bezugsfläche 14 des Anschlussbauteiles 11 sind durch ein vorgespanntes Dichtelement zumindest teilweise getrennt, das als Profilkörper 15 ausgebildet ist. Da die Dichtwirkung des Profilkörpers 15 in radialem Abstand zur Umfangsfläche des Schaftes 10 des Kugelzapfens 1 eintritt, wird ein wirkungsvoller Schutz des Kugelzapfens 1 vor Korrosion erreicht.

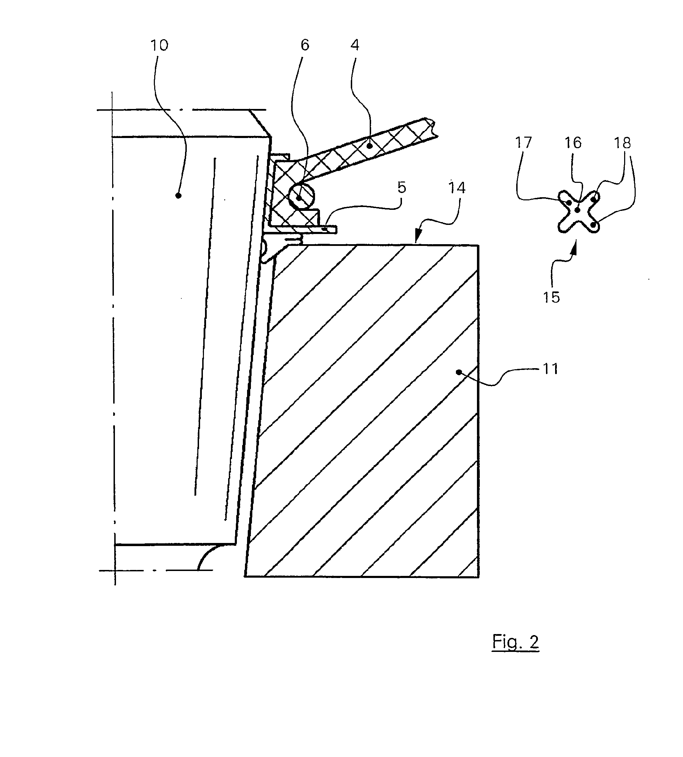

In den Figuren 2 bis 4 sind verschiedene Profilkörper 15 sowohl im spannungsfreien Zustand als auch in vorgespannter Einbaulage im Kugelgelenk dargestellt. Sie bestehen jeweils aus einem Profilgrundkörper 16 mit Übergangsbereichen 17, an die sich Dichtsegmente 18 anschließen. Von den Dichtsegmenten 18 wird die bezüglich der Dichtwirkung relevante, stetig verlaufende Kontur 19 des Dichtquerschnittes des Profilkörpers 15 bestimmt. So wird beispielsweise bei dem in Fig. 2 dargestellten Profilkörper 15 eine besonders effiziente Dichtwirkung erzielt, indem die zwei radial außen liegenden Dichtsegmente 18 gemeinsam eine erste zwischen dem Flansch 13 des Stützringes 5 und der Bezugsfläche 14 des Anschlussbauteils 11 erzeugte Barriere bilden und eine Mehrfach-Redundanz dadurch gegeben ist, dass ein drittes und viertes Dichtsegment 18 dichtend unter Vorspannung am Schaft 10 des Kugelzapfens 1 anliegen.

Eine Abdichtung des Schaftes 10 des Kugelzapfens 1 wird bei mit Dichtsegmenten 18 versehenen Profilkörpern 15 im Wesentlichen durch unter Krafteinwirkung erfolgender Stauchung oder Durchbiegung des betreffenden Dichtsegmentes 18 erreicht, wie auch bei Vorhandensein von Übergangsbereichen 17 durch eine Auslenkung der Dichtsegmente 18 infolge der elastischen Eigenschaften der Übergangsbereiche 17.

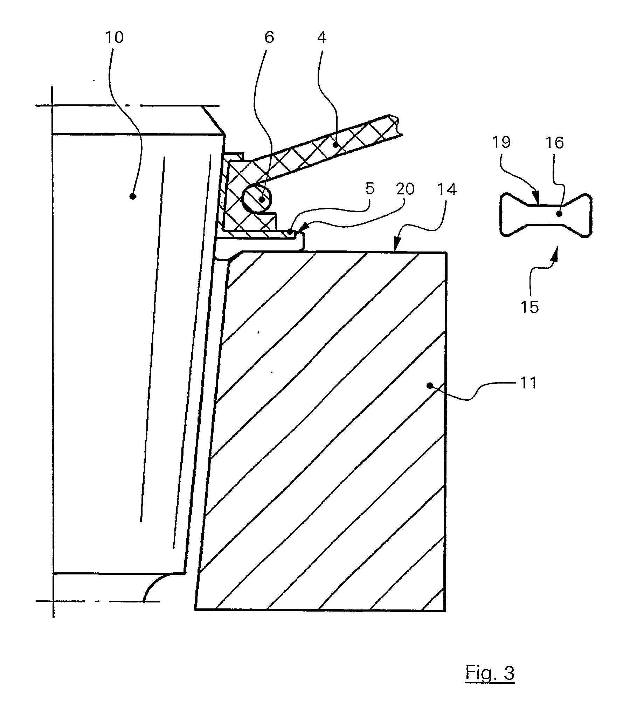

Bei dem in Fig. 3 dargestellten, langgestreckt ausgebildeten Profilkörper 15 sind die Dichtsegmente 18 großvolumig gestaltet, so dass einerseits ein Dichtsegment 18 flächig zur Anlage am Schaft 10 des Kugelzapfens 1 gebracht ist und andererseits das diesem gegenüberliegende Dichtsegment 18 den Flansch 13 des Stützringes 5 umgreift und an der Stirnfläche 20 des Flansches 13 zur Anlage kommt.

Dabei liegt es unabhängig von der gewählten Ausführungsform im Rahmen der Erfindung, unterschiedlich gestaltete Dichtsegmente 18 an einem Profilkörper 15 zu kombinieren, um an der jeweiligen Dichtposition des Dichtsegmentes 18 die gewünschte Dichtwirkung zu erzielen und über das Zusammenwirken der Dichtsegmente 18 ein redundantes Dichtsystem zu schaffen.

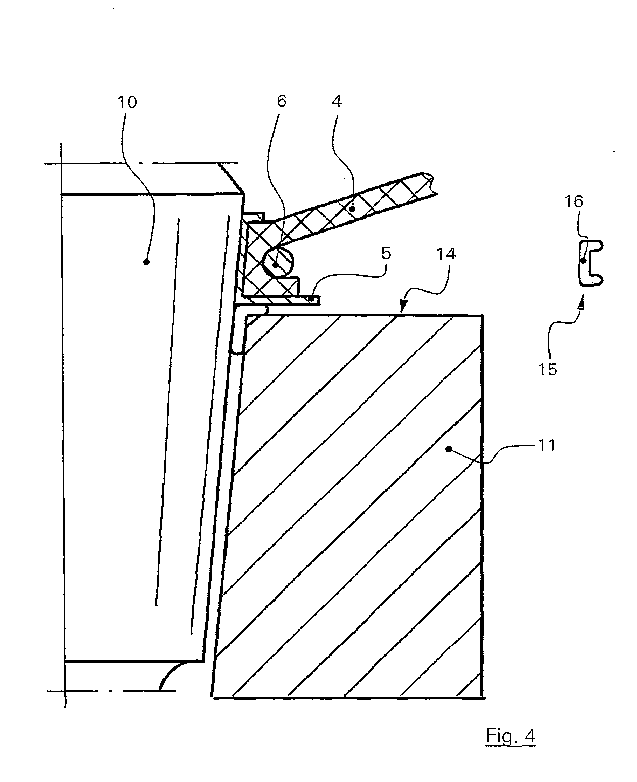

Die Besonderheit des in Fig. 4 erfassten Profilkörpers 15 liegt insbesondere darin, dass die Übergangsbereiche 17 mit stetig verlaufenden Krümmungsradius in den Profilgrundkörper 16 und in die Dichtsegmente 18 übergehen, so dass die elastischen Eigenschaften des Profilgrundkörpers 16 die Dichtwirkung des gesamten Profilkörpers 15 mitbestimmen.

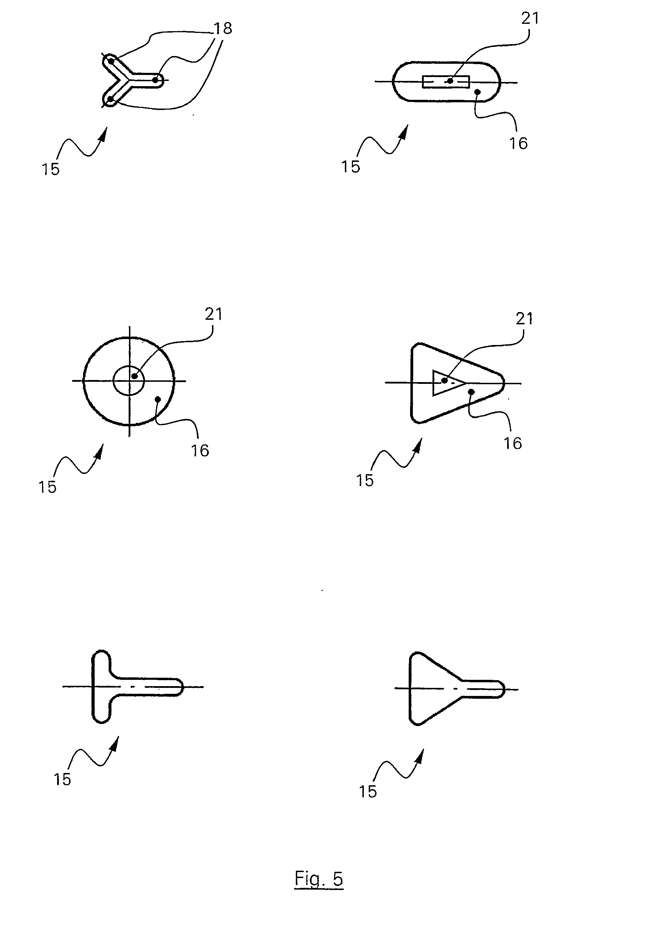

In Fig. 5 ist eine Auswahl weiterer Queerschnittsformen von Profilkörpern 15 dargestellt, die eine effiziente Dichtwirkung erreichen lassen. Es sind Formen gezeigt die wahlweise erfindungsgemäße Dichtsegmente 18 und Übergangsbereiche 17 zum Profilgrundkörper 16 enthalten, wie auch solche, bei denen mit Bezug auf den Einsatzfall des Profilkörpers 15 die erfindungsgemäßen Dichtsegmente 18 entfallen sind. In Abhängigkeit vom konkreten Einsatzfall und der gewünschten Dichtwirkung liegt es im Rahmen der Erfindung, die Profilkörper 15 mit Stabilisierungselementen 21 zu versehen.

Auf der Grundlage der im Rahmen der Erfindung vorgestellten, als Profilkörper ausgeführten Dichtelemente besteht die Möglichkeit, in Abhängigkeit vom Einbauort des Kugelgelenkes und der erforderlichen Dichtfunktion das jeweils geeignete Dichtelement auszuwählen.

### Bezugszeichenliste

- 1: Kugelzapfen
- 2: Lagerschale
- 3: Gehäuse
- 4: Dichtungsbalg
- 5: Stützring
- 6: Rundspannring
- 7: Flachspannring
- 8: Gehäusegrundkörper
- 9: Verschlussdeckel
- 10: Schaft
- 11: Anschlussbauteil
- 12: Basissteg
- 13: Flansch
- 14: Bezugsfläche
- 15: Profilkörper
- 16: Profilgrundkörper
- 17: Übergangsbereiche
- 18: Dichtsegmente
- 19: Kontur
- 20: Stirnfläche
- 21: Stabilisierungselement

## Patentansprüche

1. Kugelgelenk, vorzugsweise zum Einsatz in Fahrzeugen, insbesondere im Bereich des Fahrwerkes von Kraftfahrzeugen, mit einem, eine Gelenköffnung aufweisenden Kugelgelenkgehäus (3), mit einem im Kugelgelenkgehäuse angeordneten, sich durch die Gelenköffnung erstreckenden Kugelzapfen (1), an den ein Schaft (10) angeformt ist, mit einem, auf dem Schaft des Kugelzapfens angeordneten Stützring (5) und einem Dichtelement (15), das zwischen dem Stützring und einem den Schaft des Kugelzapfens umschließenden Anschlussbauteil (11) angeordnet ist, wobei das Dichtelement als elastisch und/oder plastisch verformbarer Profilkörper (15) ausgebildet ist, dessen wirksamer, krafteinwirkungsfreier Querschnitt von einer stetig verlaufenden, gekrümmten Kontur (19) begrenzt ist, die im eingebauten Zustand einer Deformation unterliegt, im Ergebnis derer zumindest ein Teilbereich der Kontur (19) an den angrenzenden und abzudichtenden Bereichen (10, 13, 14) anliegt
**dadurch gekennzeichnet, dass**
der elastisch und/oder plastisch verformbare Profilkörper (15) einen Profilgrundkörper (16) und Dichtsegmente (18) aufweist.

2. Kugelgelenk nach Anspruch 1, **dadurch gekennzeichnet, dass** sich die Dichtsegmente (18) bezogen auf den Profilgrundkörper (16) radialorientiert erstrecken.

3. Kugelgelenk nach Anspruch 1 oder 2, **dadurch gekennzeichnet, dass** zur Verbindung des Profilgrundkörpers (16) mit den Dichtsegmenten (18) Übergangsbereiche (17) vorgesehen sind.

4. Kugelgelenk nach Anspruch 3, **dadurch gekennzeichnet, dass** für den Übergangsbereich (17) ein Material oder eine Materialkombination vorgesehen ist, die eine elastische Auslenkung der an den Übergangsbereich (17) angrenzenden Dichtsegmente (18) zulässt.

5. Kugelgelenk nach einem der vorgenannten Ansprüche, **dadurch gekennzeichnet, dass** der Profilkörper (15) eine Verbindungsfläche aufweist, über die der Profilkörper (15) mit einem angrenzenden Bauteil (5, 13) verbunden ist.

6. Kugelgelenk nach Anspruch 5, **dadurch gekennzeichnet, dass** es sich bei dem angrenzenden Bauteil um den Stützring (5) handelt.

7. Kugelgelenk nach Anspruch 5 oder 6, **dadurch gekennzeichnet, dass** die Verbindung des Profilkörpers (15) mit dem angrenzenden Bauteil (5, 13) durch Vulkanisation oder durch Verkleben hergestellt ist.

8. Kugelgelenk nach Anspruch 5, **dadurch gekennzeichnet, dass** der Profilkörper (15) in Vorbereitung der Montage des Kugelgelenkes auf dem Kugelzapfen (1) oder dem Stützring (5) positioniert ist.

9. Kugelgelenk nach Anspruch 8, **dadurch gekennzeichnet, dass** die Positionierung des Profilkörpers (15) im Ergebnis eines radialen Aufweitens des Profilkörpers (15) durch Form- und/oder Kraftschluss auf dem betreffenden Bauteil (1, 10, 5, 13) erfolgt.

10. Kugelgelenk nach Anspruch 1, **dadurch gekennzeichnet, dass** der Stützring (5) einen radial verlaufenden Flansch (13) aufweist, an dem zumindest ein Dichtsegment (18) des Profilkörpers (15) unter Vorspannung anliegt.

11. Kugelgelenk nach Anspruch 1 oder 10, **dadurch gekennzeichnet, dass** der Stützring (5) einen radial verlaufenden Flansch (13) aufweist, an dessen radial außenliegender Stirnfläche (20) zumindest ein Dichtsegment (18) des Profilkörpers (15) unter Vorspannung anliegt.

12. Kugelgelenk nach einem der vorgenannten Ansprüche, **dadurch gekennzeichnet, dass** der Profilkörper (15) mindestens ein Stabilisierungselement (21) aufweist.

## Claims

1. Ball joint, preferably for use in motor vehicles, in particular in the region of the chassis of vehicles, with a ball joint housing (3) which has a joint opening, with a ball stud (1) which is arranged in the ball joint housing and extends through the joint opening, and on which a shaft (10) is integrally formed, with a support ring (5) which is arranged on the shaft of the ball stud, and a sealing element (15) which is arranged between the support ring and a connection component (11) which surrounds the shaft of the ball stud, wherein the sealing element is configured as an elastically and/or plastically deformable profile body (15), whose effective cross section, which is free of force effects, is delimited by a continuously running, curved contour (19) which in the installed state is subject to a deformation, as a result of which at least a part-region of the contour (19) bears against the adjacent regions (10, 13, 14) which are to be sealed,
**characterised in that**
the elastically and/or plastically deformable profile body (15) has a profile base body (16) and sealing segments (18).

2. Ball joint according to Claim 1, **characterised in that** the sealing segments (18) extend in a radially oriented manner in relation to the profile base body (16).

3. Ball joint according to Claim 1 or 2, **characterised in that** transition regions (17) are provided in order to connect the profile base body (16) to the sealing segments (18).

4. Ball joint according to Claim 3, **characterised in that** for the transition region (17) a material or material combination is provided which allows an elastic deflection of the sealing segments (18) which are adjacent to the transition region (17).

5. Ball joint according to one of the preceding claims, **characterised in that** the profile body (15) has connection face by means of which the profile body (15) is connected to an adjacent component (5, 13).

6. Ball joint according to Claim 5, **characterised in that** the adjacent component is the support ring (5).

7. Ball joint according to Claim 5 or 6, **characterised in that** the profile body (15) is connected to the adjacent component (5, 13) by vulcanisation or adhesive bonding.

8. Ball joint according to Claim 5, **characterised in that** the profile body (15) is positioned on the ball stud (1) or the support ring (5) when preparing to assemble the ball joint.

9. Ball joint according to Claim 8, **characterised in that** the positioning of the profile body (15) takes place as a result of a radial widening of the profile body (15) by a form and/or force fit on the relevant component (1, 10, 5, 13).

10. Ball joint according to Claim 1, **characterised in that** the support ring (5) has a radially running flange (13), against which at least one sealing segment (18) of the profile body (15) bears under pre-stress.

11. Ball joint according to Claim or 10, **characterised in that** the support ring (5) has a radially running flange (13), against the radially external end face (20) of which at least one sealing segment (18) of the profile body (15) bears under pre-stress.

12. Ball joint according to one of the preceding claims, **characterised in that** the profile body (15) has at least one stabilisation element (21).

## Revendications

1. Articulation sphérique, à employer de préférence dans des véhicules, notamment au niveau du train de roulement de véhicules automobiles, comportant un logement d'articulation sphérique (3) présentant une ouverture d'articulation, comportant un tourillon sphérique (1) disposé dans le logement d'articulation sphérique, s'étendant à travers l'ouverture d'articulation, sur lequel une tige (10) est façonnée, comportant une bague d'appui (5) disposée sur la tige du tourillon sphérique et un élément d'étanchéité (15), qui est disposé entre la bague d'appui et un composant de raccordement (11) enveloppant la tige du tourillon sphérique, moyennant quoi l'élément d'étanchéité est conçu comme un corps de profilé (15) déformable élastiquement et/ou plastiquement, dont la section transversale efficace, exempte de l'action d'une force est délimitée par un contour (19) cintré, s'étendant en continu, qui est soumis en l'état monté à une déformation, en conséquence de laquelle au moins une zone partielle du contour (19) vient reposer sur les zones (10, 13, 14) contiguës et à isoler de manière étanche,
**caractérisée en ce que**
le corps de profilé (15) déformable élastiquement et/ou plastiquement présente un corps de base de profilé (16) et des segments d'étanchéité (18).

2. Articulation sphérique selon la revendication 1, **caractérisée en ce que** les segments d'étanchéité (18) s'étendent à une orientation radiale par rapport au corps de base de profilé (16).

3. Articulation'sphérique selon la revendication 1 ou 2, **caractérisée en ce que** pour relier le corps de base de profilé (16) aux segments d'étanchéité (18), des zones de transition (17) sont prévues.

4. Articulation sphérique selon la revendication 3, **caractérisée en ce que** pour la zone de transition (17), un matériau ou une combinaison de matériaux sont prévus, lesquels autorisent une déviation élastique des segments d'étanchéité (18) contigus à la zone de transition (17).

5. Articulation sphérique selon une des revendications précédentes, **caractérisée en ce que** le corps de profilé (15) présente une surface de liaison, par l'intermédiaire de laquelle le corps de profilé (15) est relié à un composant contigu (5, 13).

6. Articulation sphérique selon la revendication 5, **caractérisé en ce que** le composant contigu consiste en la bague d'appui (5).

7. Articulation sphérique selon la revendication 5 ou 6, **caractérisée en ce que** la liaison du corps de profilé (15) au composant contigu (5, 13) est établie par vulcanisation ou par collage.

8. Articulation sphérique selon la revendication 5, **caractérisé en ce que** le corps de profilé (15) est positionné lors de la préparation du montage de l'articulation sphérique sur le tourillon sphérique (1) ou la bague d'appui (5).

9. Articulation sphérique selon la revendication 8, **caractérisée en ce que** le positionnement du corps de profil (15) a lieu en conséquence d'un élargissement radial du corps de profilé (15) par conjonction de forme et/ou de force sur le composant concerné (1, 10, 5, 13).

10. Articulation sphérique selon la revendication 1, **caractérisé en ce que** la bague d'appui (5) présente une bride (13) s'étendant radialement, sur laquelle au moins un segment d'étanchéité (18) du corps de profilé (15) vient reposer sous l'effet d'une précontrainte.

11. Articulation sphérique selon la revendication 1 ou 10, **caractérisée en ce que** la bague d'appui (5) présente une bride (13) s'étendant radialement, sur la surface frontale (20) située radialement à l'extérieur de laquelle au moins un segment d'étanchéité (18) du corps de profilé (15) vient reposer sous l'effet d'une précontrainte.

12. Articulation sphérique selon une des revendications précédentes, **caractérisée en ce que** le corps de profilé (15) présente au moins un élément de stabilisation (21).
